(19) **Europäisches Patentamt**

**European Patent Office**

**Office européen des brevets**

(11) **EP 1 212 949 A1**

(12) **EUROPEAN PATENT APPLICATION**

(43) Date of publication:
**12.06.2002 Bulletin 2002/24**

(51) Int Cl.$^7$: **A23K 1/175**, A23K 1/18

(21) Application number: **01204706.4**

(22) Date of filing: **06.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **06.12.2000 NL 1016809**

(71) Applicant: **Aquablend International B.V.
9494 PD Yde (NL)**

(72) Inventors:
• **van Benthem, Jan
9494 PC Yde (NL)**
• **de Haan, Victor Otto
3297 JA Puttershoek (NL)**

(74) Representative: **Prins, Adrianus Willem et al
Vereenigde,
Nieuwe Parklaan 97
2587 BN Den Haag (NL)**

(54) **Aqueous feed supplement for cattle**

(57)     An aqueous feed supplement for cattle, comprising as cations copper, zinc, manganese, magnesium, cobalt and sodium and as anions selenium, iodine, chloride and sulfate,
and phosphoric acid, characterized in that the cation-anion balance

$$\eta = ([Cu]+[Zn]+[Mn]+[Mg]+[Co])x2 + [Na]-[Se]-[I]-[OA]-[Cl]-[SO_4]x2$$

is less than or equal to 1, and a method for the preparation thereof and the use in watering cattle.

**Description**

The invention relates to an aqueous feed supplement for cattle. This feed supplement normally contains a combination of essential nutrient elements, such as phosphorus, magnesium, zinc, copper, manganese, iodine, selenium and cobalt. The invention further relates to a method for preparing such a feed supplement, in particular from concentrated solutions of nutrient elements. Further, the invention relates to the preparation of a drinking solution in which the desired essential nutrient elements have been included in the desired concentrations.

Feed supplements used to be, and still are, offered as concentrated feed, consisting of a dry edible main constituent mixed with the above-mentioned nutrient elements in powder form. Important disadvantages of such concentrated feeds are that a considerable part of the nutrient elements is not absorbed in the digestive system and further that the administration to the individual animals in terms of their need occurs with little accuracy.

In French patent specification 2,145,053, a method is described wherein a mixture of water-soluble solids can be dosed into water, with phosphorus being used in the form of ammonium phosphate. A disadvantage of this method is that the choice of the starting materials is rather limited. Only water-soluble salts, acids and bases lend themselves to application in this method. This has as a consequence that in addition to offering the desired amounts of the micro- and macro-elements, as a rule also an amount of redundant ions and/or elements, for instance chlorides, are offered and/or taken up.

In EP-A-0 454 221, a method is described for manufacturing an aqueous feed supplement consisting of an aqueous solution of micro- and macro-elements, and in particular minerals and phosphorus. In this method, phosphoric acid is added to water to lower the pH of the supplement to such an extent that virtually no phosphate precipitation occurs. Further, at least one substantially water-insoluble substance is dissolved in the solution acidified with phosphoric acid. More in detail, the aqueous solution contains copper ions, zinc ions, manganese ions and magnesium ions and micro-elements such as selenium, iodine and cobalt ions. One feature of the invention described in the European patent application mentioned is that salts that do not bring negative counterions in solution are brought in solution. The supplement is included in a particular ratio in drinking water for cattle. This method enables the use of a larger range of starting materials, which in turn has as a result that the concentrations of the micro- and macro-elements in the aqueous solution can become higher and the animals take up fewer ions or substances.

In practice, the solution of minerals in water which has been acidified with phosphoric acid is added to the drinking water with a metering pump via drinking water pipe systems that are present and used by the stock farmer. The minerals and the phosphate are subsequently taken up by the animals along with the drinking water. Compared with the uptake of minerals through solid feed, this proceeds in a much more efficient manner, so that the animal, at a lower ingestion of the macro- and micro- elements and a lower release of the macro- and micro-elements, assimilates a higher content of these elements via the digestive system into the body. Not only does this yield savings in an economic sense; it is also favorable from an environmental point of view. Further, tests have shown that this product, because of its composition, is wholesome for the animals.

However, upon more protracted use of the known compositions, problems arise. In the course of time, precipitation arises in the storage systems. Moreover, a different type of precipitation arises in the water pipe system where the solution comes into contact with mains water which — obviously — has a different composition.

The first form of precipitation, i.e. that in the storage vessels, has a direct effect on the composition of the residual solution. Thus, the solution added to the drinking water will no longer have the specified composition as contemplated, which can reduce, at least disturb, the advantages for the cattle. The composition also changes to some extent owing to the second form of precipitation, i.e. that in the water supply systems, but in addition, and above all, blockages occur in the drinking water pipe system. This last presents problems especially with farmers who work with pipes of a relatively small diameter, it being noted that this occurs frequently in poultry and pig farming.

The present inventors have tried to analyze the precipitates and have undertaken to solve the problems outlined. What is contemplated in particular is to delay the precipitate production or, rather, to prevent it altogether, without sacrificing the advantageous properties of the liquid supplements.

Surprisingly, it has now been found that the precipitate production can be delayed and actually be virtually prevented without compromising the advantageous properties of the liquid supplements, when the ratio of particular cations and anions, expressed in charge equivalents, in such a solution are in a particular mutual ratio. This ratio is represented by the following formula:

$$\eta = ([Cu]+[Zn]+[Mn]+[Mg]+[Co])x2 + [Na]-[Se]-[I]-[OA]-[Cl]-[SO_4]x2$$

In this formula, [element] denotes the molar concentration (in mol/l) of the respective cation or anion in solution. $[SO_4]$ is the concentration of sulfate ions. [OA] denotes the concentration of an organic acid having an acid constant less than 5. $\eta$ represents the total of the excess of charge equivalents, which has arisen as a result of the added minerals indicated.

In a first aspect, the invention relates to an aqueous feed supplement for cattle, comprising the cations copper, zinc, manganese, magnesium, cobalt and sodium and anions based on selenium, iodine, chloride and sulfate, and, in addition, phosphoric acid, which invention is characterized in that the cation-anion balance

$$\eta = ([Cu]+[Zn]+[Mn]+[Mg]+[Co])x2 + [Na]-[Se]-[I]-[OA]-[Cl]-[SO_4]x2$$

is less than or equal to 1.

The solutions described in EP-A-0-454 221 appear to have $\eta$-values of 3-4 mol/l.

An aqueous feed supplement according to the invention gives a clearly reduced precipitate formation in the conventional storage systems over the known feed supplements. This means that the shelf life of a composition according to the invention is longer than that of known compositions, while its intended composition is maintained. This is an advantage of the composition according to the invention. Also the other type of precipitate formation, which arises in the water pipe system where the composition according to the invention comes into contact with mains water, is reduced considerably. As a result, fewer blockages of the pipes occur. The most important advantage of the invention, however, is that due to the reduced precipitate production the specified composition of the feed supplement is maintained better and for a longer time, so that the cattle profits more optimally therefrom.

In a preferred embodiment of the present invention, the cation-anion balance $\eta$ is set by adding an acid to the composition, preferably an inorganic acid, notably sulfuric acid or hydrochloric acid. Inorganic acids have as an advantage that they can generally be added without much influence on the taste of the water. Organic acids that are suitable for use in the present invention generally have an acid constant that is less than 5. An example of such organic acids is formic acid. For that matter, when using organic acids, it is to be ensured that after dilution of the supplement no microbial contamination occurs. The fact is that when organic acids are used, possibly a nutrient substrate suitable for microorganisms is created. Naturally, it is also possible to bring the cation-anion balance to the desired value by modifying the other molar concentrations, all this insofar as this substantially does not affect the quality and the applicability of the feed supplement contemplated. It is noted that it depends on the animal species whether the addition of particular acids or salts has consequences for the uptake of water which has been treated with the composition according to the invention.

It is moreover preferred to set the cation-anion balance such that $\eta$ is less than or equal to 0. Given such an $\eta$, the precipitate production decreases further or is even substantially eliminated, which brings out the advantages of the invention still better.

The composition according to the invention can be used as feed supplement for live stock. In principle, all such kinds of live stock are eligible for which raising the efficiency of mineral uptake provides advantages from the viewpoint of well-being, health, environment or economy. To be considered here is live stock that is kept in factory farming or is otherwise of interest from a commercial point of view. Examples include inter alia poultry, cattle, sheep, goats, pigs, and horses.

Depending on the type of live stock, different compositions can be prepared. Depending on the type of live stock, more or fewer different macro- and micro-elements can be used in variable amounts. The composition does not necessarily depend on the type of live stock alone, but may also be adjusted to the specific need of the live stock, such as is the case, for instance, with fattening cows or dairy cows, or when the uptake of the other minerals from conventional feed has specific deficiencies, for instance too low a content of certain micro-elements. To be considered here are, for instance, cows grazed on grass in which particular trace elements are present in too low concentrations. Also, other additives can be added to the feed supplements according to the invention, such as, for instance, vitamins, in particular from the B group, or amino acids.

In a further aspect, the invention relates to a method for preparing an aqueous feed supplement for cattle, comprising a step wherein a composition comprising the cations copper, zinc, manganese, magnesium, cobalt and sodium and anions based on selenium, iodine, chloride and sulfate, and phosphoric acid undergoes a treatment, such that the cation-anion balance

$$\eta = ([Cu]+[Zn]+[Mn]+[Mg]+[Co])x2 + [Na]-[Se]-[I]-[OA]-[Cl]-[SO_4]x2$$

is less than or equal to 1.

The invention further relates to a method for preparing an aqueous feed supplement for cattle, comprising steps wherein concentrated solutions having therein magnesium, zinc, copper, manganese, optionally cobalt and sodium ions or mixtures thereof are mixed with phosphoric acid, followed by a step wherein the cation-anion balance $\eta$ = ([Cu]+[Zn]+[Mn]+[Mg]+[Co])x2 + [Na]-[Se]-[I]-[OA]-[Cl]-[SO_4]x2 is set such that it becomes less than or equal to 1.

Furthermore, the invention relates to a method for preventing precipitate production in an aqueous solution for watering cattle, which comprises steps wherein a composition comprising copper, zinc, manganese, magnesium, optionally cobalt and sodium cations and selenium anions, iodine, chloride and sulfate anions, and phosphoric acid is added to water, characterized in that further this composition is composed such, or is subjected to a treatment such, that the cation-anion balance

$$\eta = ([Cu]+[Zn]+[Mn]+[Mg]+[Co])x2 + [Na]-[Se]-[I]-[OA]-[Cl]-[SO_4]x2$$

becomes less than or equal to 1 and to a method for providing a drinking solution for cattle wherein a composition according to the invention is added to the drinking water.

For a description of the cations and anions desired in the supplements according to the invention, reference is made to EP-A-0 454 221, over which application the present invention provides an improvement. Directive quantities of the following nutrient elements are used (per 100 kg feed supplement):

7-12 kg P
0.2-0.6 kg Mg
0.15-0.6 kg Zn
0.5-2.0 kg Na
1-4 kg K
15-40 g Cu
0.05-0.2 kg Mn
2-5 g I
up to 3 g Se.

Especially ions of copper, zinc, manganese and magnesium are relevant. The compositions according to the present invention can be suitably formed from the following basic solutions, while the eventual composition depends on the organism for which the composition is intended:

- concentrated magnesium sulfate solution;
- concentrated zinc sulfate solution;
- concentrated copper sulfate solution;
- concentrated manganese sulfate solution;
- concentrated sodium iodate solution;
- concentrated sodium selenate solution; and
- concentrated phosphoric acid solution.

Setting the cation-anion balance $\eta$ can be optimized by adding a strongly mineral acid such as hydrochloric acid or sulfuric acid or by an organic acid such as formic acid. Acids that lead to nitrites or sulfites are undesirable. Formic acid, when used with certain organisms, can sometimes lead to problems of taste and/or odor and is therefore not suitable, at least less suitable, for those organisms.

Examples:

Different compositions were used and tested on a table chicken farm. All compositions in the table are expressed in the minerals important for precipitation. Used for comparison is a commercially available product: Aquablend® *(ex* Aquablend International B.V.; Yde, Netherlands). All compositions were liquid at the beginning of the test and exhibited no precipitation. The result is that the composition with organic acid does not exhibit precipitation, but that the cattle has a reduced uptake of water. When the composition with sulfuric acid is used, no precipitation is found either, while the uptake of water remained constant. The comparative composition gave rise to a precipitation.

| Composition | organic acid (formic acid) (wt.%) | mol/l | inorganic acid (sulfuric acid) (wt.%) | mol/l | comparative example (wt.%) | mol/l |
|---|---|---|---|---|---|---|
| Phosphoric acid 75 % | 39.19 | 3.81 | 38.01 | 3.87 | 43.11 | 4.62 |
| Mg | 1.70 | 0.89 | 1.65 | 0.90 | 1.87 | 1.08 |
| Zn | 1.70 | 0.33 | 1.65 | 0.34 | 1.87 | 0.40 |
| Mn | 1.21 | 0.28 | 1.18 | 0.28 | 1.33 | 0.34 |
| Cu | 0.58 | 0.12 | 0.57 | 0.12 | 0.64 | 0.14 |
| Co | 0.0056 | 0.0012 | 0.0055 | 0.0012 | 0.0062 | 0.0015 |
| Na | 0.0047 | 0.0026 | 0.0046 | 0.0026 | 0.0052 | 0.0032 |
| I | 0.017 | 0.0017 | 0.016 | 0.0017 | 0.019 | 0.0021 |
| Se | 0.0028 | 0.00046 | 0.0028 | 0.00046 | 0.0031 | 0.00055 |
| sulfuric acid 98% | - | - | 11.5 | 1.56 | | |
| Organic acid | 7.73 | 2.13 | | | | |

EP 1 212 949 A1

EP 1 212 949 A1

| | | | | |
|---|---|---|---|---|
| Water $\eta$ | 46.41 | 45.07 | 41.94 | 39.50 |

49.55

46.90 4

1

**EP 1 212 949 A1**

**Claims**

1. An aqueous feed supplement for cattle, comprising the cations copper, zinc, manganese, magnesium, optionally cobalt and sodium and anions based on selenium, iodine, chloride and sulfate, and phosphoric acid, **characterized in that** the cation-anion balance

$$\eta = ([Cu]+[Zn]+[Mn]+[Mg]+[Co])x2 + [Na]-[Se]-[I]-[OA]-[Cl]-[SO_4]x2$$

   is less than or equal to 1.

2. An aqueous feed supplement according to claim 1, **characterized in that** $\eta$ is less than or equal to 0.

3. An aqueous feed supplement according to claim 1 or 2, **characterized in that** $\eta$ has been set by addition of an acid other than phosphoric acid.

4. An aqueous feed supplement according to claim 3, **characterized in that** the acid is an organic or inorganic acid.

5. An aqueous feed supplement according to claim 3 or 4, **characterized in that** the acid is inorganic.

6. An aqueous feed supplement according to any one of claims 3-5, **characterized in that** the acid is sulfuric acid or hydrochloric acid.

7. A method for the preparation of an aqueous feed supplement for cattle, comprising a step wherein a composition comprising as cations copper, zinc, manganese, magnesium, optionally cobalt and sodium and anions based on selenium, iodine, chloride and sulfate, and phosphoric acid, is composed such, or subjected to a treatment such, that the cation-anion balance

$$\eta = ([Cu]+[Zn]+[Mn]+[Mg]+[Co])x2 + [Na]-[Se]-[I]-[OA]-[Cl]-[SO_4]x2$$

   becomes less than or equal to 1.

8. A method for the preparation of an aqueous feed supplement for cattle, comprising steps wherein concentrated solutions of magnesium ions, zinc ions, copper ions, manganese ions, optionally cobalt ions and sodium ions or mixtures thereof are mixed with phosphoric acid and optionally water, followed by a step wherein the cation-anion balance

$$\eta = ([Cu]+[Zn]+[Mn]+[Mg]+[Co])x2 + [Na]-[Se]-[I]-[OA]-[Cl]-[SO_4]x2$$

   is set such that it becomes less than or equal to 1.

9. A method for preventing precipitate production in an aqueous solution for watering cattle, which comprises steps wherein a composition comprising copper cations, zinc cations, manganese cations, magnesium cations, optionally cobalt anions and sodium cations and selenium anions, iodine anions, chloride anions and sulfate anions, and phosphoric acid is added to water, **characterized in that** the composition has undergone a treatment, such that the cation-anion balance

$$\eta = ([Cu]+[Zn]+[Mn]+[Mg]+[Co])x2 + [Na]-[Se]-[I]-[OA]-[Cl]-[SO_4]x2$$

   becomes less than or equal to 1.

10. A method for providing a drinking solution for cattle, wherein a composition as defined in claim 1 is added to drinking water.

**European Patent Office**

## EUROPEAN SEARCH REPORT

Application Number

EP 01 20 4706

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 96 25055 A (MAPLE LEAF FOODS INC ;STECKLEY J DAVID (CA); JEBELIAN VAROUJ (CA)) 22 August 1996 (1996-08-22) * page 9, line 27-29 * * page 13, line 11 - page 15, line 24 * * page 16, paragraph 1 * | 1,7-10 | A23K1/175 A23K1/18 |
| Y | | 2-6 | |
| Y | GB 2 124 068 A (RUMENCO LIMITED) 15 February 1984 (1984-02-15) * page 1, line 64 - page 2, line 31 * | 2-6 | |
| A | US 5 556 634 A (MOORE WILLIAM P) 17 September 1996 (1996-09-17) * claim 1; examples 1,2 * | 1-10 | |
| D,A | EP 0 454 221 A (EPENHUYSEN CHEM FAB) 30 October 1991 (1991-10-30) * claims 12,13; examples 1-3 * | 1-10 | |

**TECHNICAL FIELDS SEARCHED (Int.Cl.7)**

A23K

The present search report has been drawn up for all claims

| Place of search | Date of completion of the search | Examiner |
|---|---|---|
| THE HAGUE | 21 March 2002 | Rooney, K |

EPO FORM 1503 03.82 (P04C01)

**ANNEX TO THE EUROPEAN SEARCH REPORT
ON EUROPEAN PATENT APPLICATION NO.**

EP 01 20 4706

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2002

| Patent document cited in search report | | Publication date | Patent family member(s) | | Publication date |
|---|---|---|---|---|---|
| WO 9625055 | A | 22-08-1996 | AU | 4617896 A | 04-09-1996 |
| | | | CA | 2213219 A1 | 22-08-1996 |
| | | | WO | 9625055 A1 | 22-08-1996 |
| GB 2124068 | A | 15-02-1984 | ZA | 8305592 A | 25-04-1984 |
| US 5556634 | A | 17-09-1996 | NONE | | |
| EP 0454221 | A | 30-10-1991 | NL | 9000996 A | 18-11-1991 |
| | | | AT | 129126 T | 15-11-1995 |
| | | | AU | 642237 B2 | 14-10-1993 |
| | | | AU | 7518991 A | 07-11-1991 |
| | | | CA | 2040496 A1 | 27-10-1991 |
| | | | DE | 69113854 D1 | 23-11-1995 |
| | | | DE | 69113854 T2 | 15-05-1996 |
| | | | DK | 454221 T3 | 18-03-1996 |
| | | | EP | 0454221 A1 | 30-10-1991 |
| | | | ES | 2082110 T3 | 16-03-1996 |
| | | | FI | 911935 A | 27-10-1991 |
| | | | GR | 3018491 T3 | 31-03-1996 |
| | | | IE | 911253 A1 | 06-11-1991 |
| | | | JP | 2805254 B2 | 30-09-1998 |
| | | | JP | 4228038 A | 18-08-1992 |
| | | | NO | 300951 B1 | 25-08-1997 |
| | | | NZ | 237940 A | 27-07-1993 |
| | | | PT | 97493 A ,B | 31-01-1992 |
| | | | TR | 28561 A | 09-10-1996 |
| | | | US | 5160753 A | 03-11-1992 |